# EUROPEAN PATENT SPECIFICATION

(11) **EP 1 372 375 B1**
(45) Date of publication and mention of the grant of the patent: **29.11.2006**
(21) Application number: 01914065.6
(22) Date of filing: 28.02.2001
(51) Int. Cl.: A01G 25/02

(54) **Water inlet filter in an emitter**
Wassereinlassfilter in einem Auslass
Filtre d'entrée d'eau dans un émetteur

(30) Priority: 28.02.2000 GR 2000100065
(43) Date of publication of application: 02.01.2004
(73) Proprietor: Dermitzakis, Emmanuil, 15669 Athens (GR); Dermitzakis, Aristides, 156 69 Papagos-Athens (GR)
(72) Inventor: Dermitzakis, Emmanuil, 15669 Athens (GR); Dermitzakis, Aristides, 156 69 Papagos-Athens (GR)
(86) International application number: PCT/GR2001/000012
(87) International publication number: WO 2001/064019

(56) References cited:
- EP-A- 0 295 400
- EP-A- 0 620 966
- WO-A-96/24243
- WO-A-99/37137

## Description

The present invention relates to self-compensating, constant discharge emitters used for irrigation purposes and in particular to a dynamic arrangement that filters the water under constant conditions, prior to its inlet to an emitter.

### State-of-the-Art

All the existing known technologies for self-compensating emitters had to solve the following problems:
a) to filter the inlet water
b) to prevent blockages, ensuring the emitter has the widest, shortest and simplest water paths possible
c) to maintain a constant discharge for all the range of pressures in the network, i.e. For both high and low pressures
d) to operate as a non- return valve
e) to reduce the emitter volume

Patent PCT/GR 96/00004, corresponding to WO-A-9624243, despite the fact that the bending and relative movement of a membrane removes foreign matter, failed to solve the problems. Water passes through particular channels, engraved onto the surface of the common filtering and discharge adjustment chamber , that on one hand determine the quality of filtering, but on the other hand, should they get blocked, the membrane that moves onto them will not manage to penetrate their interior part and clean them. Furthermore, the position of the membrane is not determined but always depends on the pressure of the water in the network. The membrane does not tighten the emitter at any phase of its operation and water enters and exits freely even if no pressure exists in the network, resulting in:
- The network is emptied from water immediately after the interruption of irrigation and a long time is required for re-filling before the operation restarts.
- All emitters do not start operating simultaneously; instead the start-up of their operation is random and uncontrolled, whereas a long time is required until uniform operation of all emitters of the network is achieved.
- The emitter is not tight in the case of depression in the network and so foreign matter penetrates into the emitter in the opposite direction, from the water outlet hole

Regarding other known patents, they have failed to solve to a sufficient extent any other problem, bar apart from the non- return valve; for example, water inlet holes covered by the membrane in patents for self - adjusting, constant discharge emitters, such as EOP 0482843 A1, EPO 730822 A2, SP 2137825, FR 2687540 A, Us 6027048 A, in no way can be considered as filter, as will become evident in the sequel, despite the fact that water inlet to the emitter is possible, only once a predetermined pressure is achieved and the inlet hole is revealed.

In more detail, in these technologies, the common membrane is located between two facing rims or holes, i.e. the inlet hole or rim - which it covers tightly - and the outlet or discharge adjustment rim or hole. If the distance between the two facng holes or rims and hence the width of variation of the membrane is H, and the distances from the inlet and outlet holes or rims are H1 and H2, respectively, the relationship H = H1+H2 (1) holds. From the moment that the membrane will be raised from the inlet rim that operates as a non-return valve, it must automatically move immediately towards the opposite rim for the final or partial adjustment of discharge and remain there. It makes no difference whether the opposite rim concerns a rim for final or partial adjustment of discharge (e.g. Patent SP 2137825, Patent PCT/GR 96/00004). After operation start-up, and throughout the irrigation, the common membrane of the system operates at the opposite outlet hole from which it is displaced by a smaller or larger distance, depending on the pressure P1 of the network. In general, its position, i.e. the value of H2 always depends on the pressure of the network, as a adjustment of the discharge is proportional, and this is a characteristic of all known technologies. Hence, due to the relationship (1), the higher the value of the distance form the outlet rim, H2 is, the shorter the distance H1 of the common membrane from the water inlet rim is. The void space for water inlet H1 is not, hence, steady, despite the constant by definition discharge Q of the emitter. Anyway, as the range of operating pressures of the emitter must be very large, both the range of variation of the displacement of the membrane H, as well as the range of variation of H1 must also be very wide. Characteristic example of a very wide range of variation of H is given by patent FR. 2687540 A. Hence, a void space H1, with the wide by definition variations of its value cannot constitute a filter for the protection of the emitter from blockages.

### Brief Description of the invention

The present invention relates to a self-compensating constant discharge emitter according to claim 1.

The emitter has a small volume and is particularly simple and withstands blockages as the presence of the meander-like path for its operation at low pressure regions is not necessary.

### Description of the drawings

- Drawing 1.: Cross section of an emitter with one water inlet opening
- Drawing 2.: View of the external part of the cover of the emitter of drawing 1.
- Drawing 3.: Plan view of the internal part of the cover of the emitter of drawing I
- Drawing 4.: Plan view of the internal part of the main body of the emitter of drawing 1
- Drawing 5.: Cross section of the emitter of drawing 1 with the membrane raised
- Drawing 6.: Cross section of an emitter with the concave surface of the membrane in the direction of water inlet
- Drawing 7.: Cross section of an emitter with membrane flat at start, prior to execution of pre-tension or bending
- Drawing 8.: Plan view of the main body of the emitter of drawing 7.
- Drawing 9.: Cross section of an ON-LINE emitter with two independent membranes

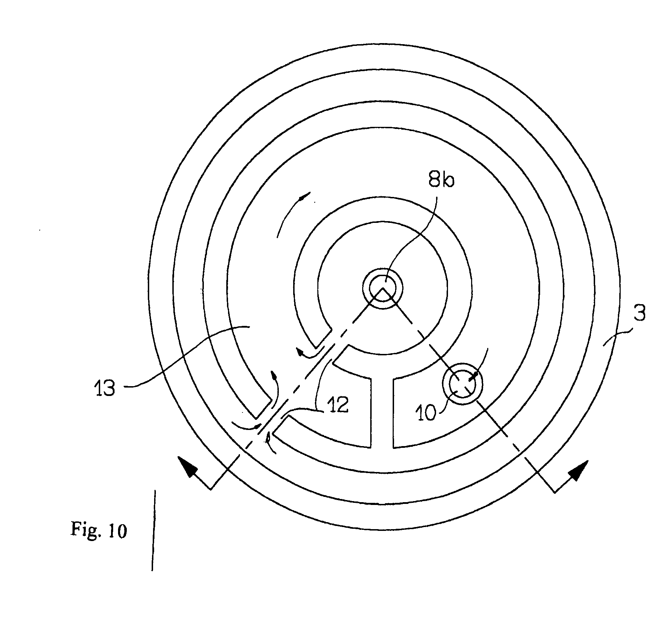

- Drawing 10.: Plan view of the main body of the emitter of drawing 13 with the circumferential chamber
- Drawing 11.: Cross section of an ON-LINE emitter with one membrane.

### Detailed Description of the invention

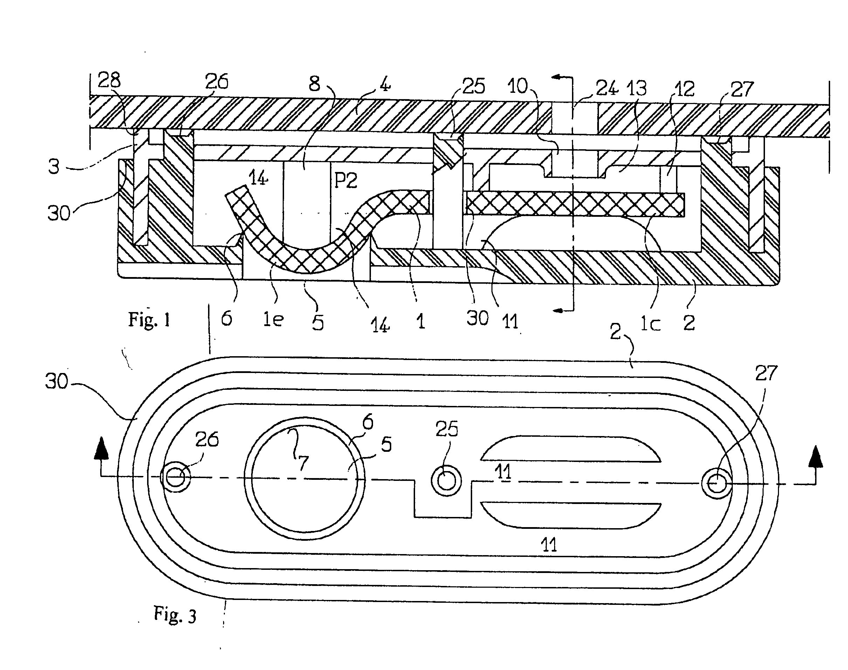

Drawings 1, 2, 3, 4, 5 illustrate cross sections of an emitter welded in the internal part of a tube 4. The elastic membrane I exists between the main body 3 and the cover 2.

The cover 2 of the emitter bear the opening 5 for water inlet with the ring 6 and the circumferential edge with the sharp rims 7 that are continuously and fully covered by the part 1e of the membrane 1.

The body 3 of the emitter bear a pin 8 which exerts permanent pressure - pretension onto the part 1e of the membrane 1, the convex part of which extends to the external surface of the cover 2 of the emitter. Since the emitters with membranes examined in this case are self-adjusted and feature an elastic membrane, the part 1e of the membrane 1 over the ring 6 operates as an inlet filter whereas another independent part 1c at the other end of the same membrane I above the outlet hole 10, adjusts and maintains the water discharge steady for all values of pressure P1 in the network.

The wide space 14 with the hole 5, the ring and the part 1e of the membrane 1, constitute the inlet or filtering chamber, whereas the space 13 with the outlet hole 10 and the part 1c of the membrane I constitute the discharge adjustment chamber.

It is evident that for the flow to be maintained steady, the part 1c of the membrane I located above the outlet hole 10 will assume each time different positions and hence a different distance from the rim 10 according to the pressure P1 exerted to the network each time.

Opposite to that, the part 1e of the membrane 1 that corresponds to the inlet hole 5, i.e., to the ring 6 and the edge 7 will be raised only when the pressure P1 of water in the network becomes equal or greater than the particular value Pa required for overcoming the pretension force Pr exerted to the membrane by the pin 8.

Since water enters the emitter due to the pressure drop caused exactly by this water inlet, a smaller pressure P2 develops in the space numbered 14, at the filtering chamber at the rear part of the membrane 1e, and hence a pressure difference ΔP1 = P1-P2 develops at the front and behind of the part 1e of the membrane.

As seen in the drawings, no outlet holes exist in space 14, that are covered by the membrane 1e during its movement and cause additional pressure drops, and thus ΔP1 alone acts in the region of the membrane 1e. ΔP1 is a constant value depending only on the pretension that is also constant. Under the condition that the emitter has, by definition, also a constant discharge value, the measure of the raising H1 of this part of the membrane is also constant and remains constant during the whole irrigation operation independed of the value of P1.

In the phase of raising, water inlet to the emitter and starts for the first time and simultaneously, the operation of the absolutely controlled filtering of inlet water also starts.

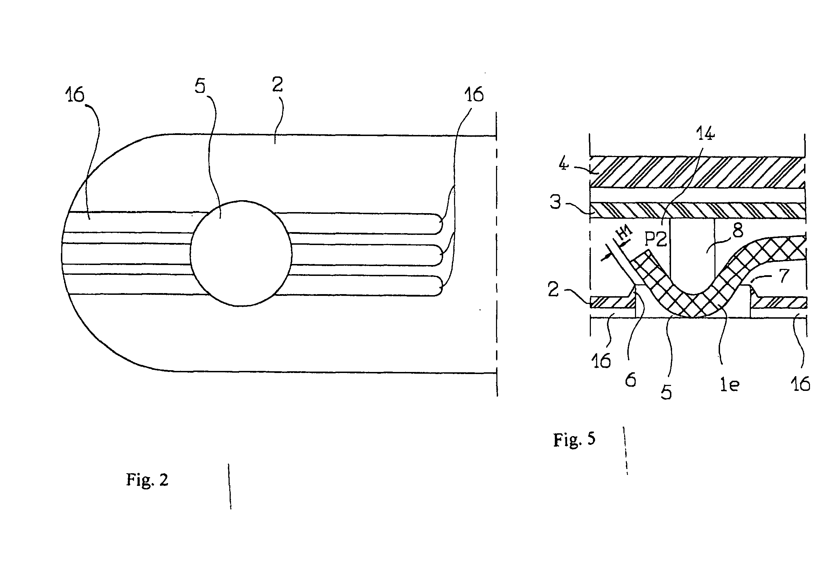

As the circumference of the ring 6 is very large relative to the circumference of the opening 10 for water outflow from the emitter, a minimum raising H1 of the part 1e of the membrane is required (drawing 5) for the passage of the particular steady nominal water flow Q.

Foreign matter, with dimensions larger than the constant measure of raising H1, cannot descend to the emitter and with the end of operation of the emitter and the drop of pressure at values below Pa, the membrane le touches and covers the edge 7, and the foreign matter that may exist in the region of the ring 6 and the rim 7, are detached from the emitter.

A dynamic, self-cleaning filter is formed with moving elements The part 1e of the membrane I above the inlet opening 5 is aimed to take, according to the previous descriptions, at all phases of emitter operation and all values of pressure P1 in the network, only two discrete positions:

### Position 1:

Water network with pressure smaller than the predetermined value Pa required for overcoming pretension. The membrane covers the ring completely and tightly. No water enters into the emitter, degree of raising H 1 = 0.

### Position 2:

Water Network with pressure equal or greater than the predetermined value Pa. The membrane is raised ant remains at a constant height above the inlet rim, irrespectively of the value of pressure of water in the network. I.e., a stable, very narrow void space H1 is formed for water passage and as a result, ideal conditions for steady filtering develop.

Hence, the system operates as an On-OFF valve with two absolutely discrete positions. It is evident that the quality of filtering achieved due to the very small void space H1 that opens and closes, being essentially self cleaning at each operation start up and interruption of function of the emitter, cannot be compared with any one of the known emitters.

Apart from all that, foreign matter that could not penetrate due to their larger size cannot remain coagulated at the inlet 5 of the emitter for another reason: They are carried over by the continuous passage of the water through the parallel external channels 16 of the cover 2 which have the same direction as water in the tube 4.

Water, having overflown over the edge 7 towards the wide space 14, follows the the path 11 of the space 11 behind the membrane 1c and through the passage 12 enters to the space13 of the chamber for the final adjustment of the discharge, behind the membrane 1c that also bears the outlet hole 10. The distances H2,of the part 1c of the membrane from the rim 10, in order that the discharge is maintained steady, are proportional to the pressures prevailing at any moment at the spaces 11, 12 as well as in the network. However, the displacements of the two ends 1e and 1c, of the common membrane 1 at the inlet regions 5 and final adjustment regions 10, are totally independent of each other.

In another variation, the convex part of the membrane extends further down from the external surface of the cover 2 of the emitter (not drawn).

In another variation, after the path 11 and before the entrance into space 13, a part of a static meander-like path could exist, covered by part of the membrane, or not, for achieving additional water pressure drop. This meander-like path could be traced both in the body 3 as well as the cover 2 of the emitter (not drawn).

In another variation, instead of one inlet hole, more holes with edges and pins for exerting a permanent pressure exist, covered by the same or different membranes (not drawn).

In another variation, two independent membranes exist, of which the first operates as a filter only in the filtration chamber, whereas the second operates only as a system for the adjustment of water discharge in the adjustment chamber (not drawn)

In another variation, the convex part does not extend to the lower surface of the cover 2 of the emitter (not drawn)

Alternatively, both the edges 7, as well as the rings 6 can bear at parts of their circumference, small channels so that after the start-up of the operation of the emitter, once the predetermined pressure to the network that will permit raising of the membrane 1, is achieved, the water passes through only one particular part of the circumference of the ring (not drawn).

In another variation, the inlet hole may have a shape other than circular, e.g. rectangular, ellipsoid, or the pin 8 may not exert the pressure at the center, but off-center, or more than one pins may exist (not drawn).

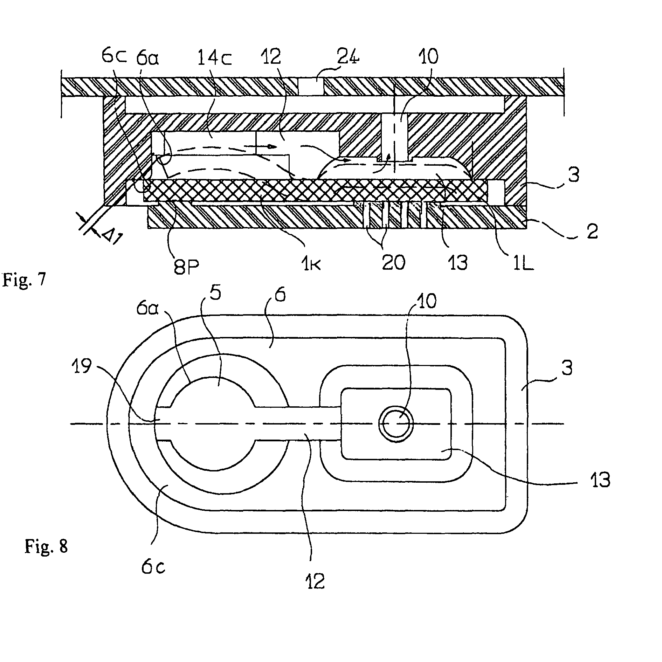

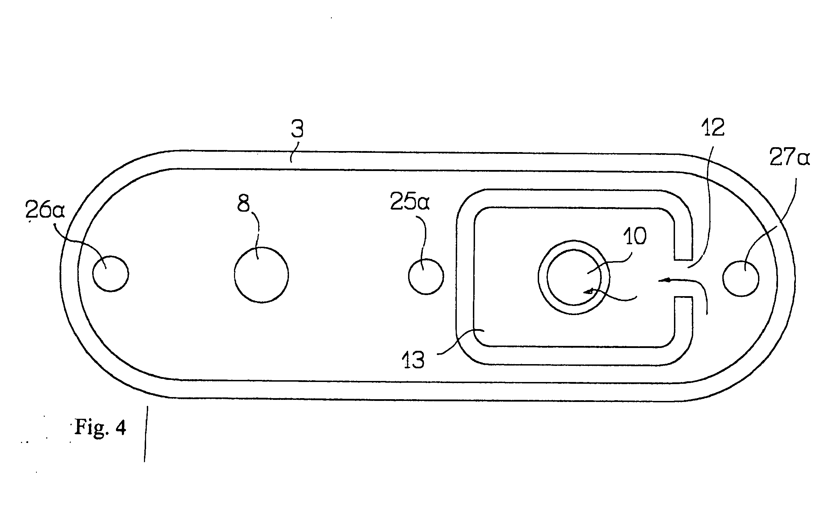

A similar behaviour is observed in the cases of drawings 7 and 8. The membrane 1k is flat and covers fully and tightly the inlet hole 5 even when no pressure exists in the network and the emitter does not operate. Opposite to the case of patent PCT/GR96/0004, in this case the emitter is absolutely tight.

In this case also, the wide space 14c with the rings 6c, 6a and the passage 19 and the part of the membrane 1K constitute the inlet chamber or the filtering chamber, whereas the space 13 with the outlet hole or rim 10 and the part 1L of the membrane, constitute the chamber for adjustment of the discharge.

Water inlet to the emitter occurs only after the pressure to the network reaches a particular predetermined value, in which case due to the pressure exerted, the membrane 1K is bent further and penetrates and is all displaced with its convex part towards the internal part of the inlet hole 5. Then, at some stage of the displacement, it reveals a passage 19 that starts at the rim 6a, significantly lower than the rim of the ring 6c. Thus the void space Δ1 is formed that corresponds to the raising H1 of drawing 5. The membrane 1K also takes a particular position in order to maintain the particular size Δ1 of the void space steady, whereas the water passes in the sequel through the inlet 12 from space 14c to the space 13 of the chamber for the final adjustment, that bears the outlet hole or rim 10. The exertion of the pressure P1 of the network to the part 1L of the membrane that corresponds to the space 13 is effected through the holes 20 of the cover 2 and the pin 8P exerts the pretension onto the membrane 1K. The broken lines show the positions of the membrane during operation.

As seen from the description and the drawings 7 and 8, the inlet 12 does not constitute a path for an additional drop of the water pressure, but only the connection of the filtering and discharge adjustment chambers. In the wide space 14c, the pressure P2 develops as known, and hence, the same pressure P2 also prevails in space 13 behind the part 1L of the membrane. Hence, the known steady pressure drop ΔP1 will move the membrane sharply and directly towards the opposite rim 10, ensuring the unhindered adjustment of the discharge, as soon as the operation of the emitter starts, i.e. as soon as the part 1K of the membrane is raised and reveals the constant void space Δ1. This operation will be repeated unchanged in the same manner, whether it concerns a low pressure or a high pressure region. Here, Δ1, as well as H1 in drawing 5, only depends on the pretension of the membrane and has been calculated so as to be sufficient for immediate and drastic displacement of the membrane 1L without requiring additional pressure drop from any additional meander-like path that only brings additional problems.

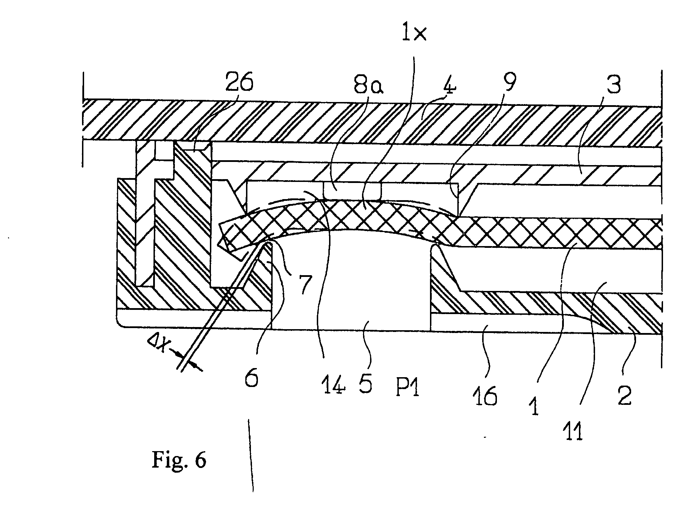

Drawing 6 illustrates another variation with the concave surface of the membrane 1X towards the direction of the water inlet. Pretension is caused both by the pin 8a, as well as circumferential ring 9. The broken lines illustrate the positions of the membrane during operation.

In this case as well, the membrane 1X is raised by H1 after it has achieved a particular pressure in the network, the value of this pressure depending again by the pretension and only. Otherwise, the same apply as for the cases of drawings 1 to 5.

In another variation of drawing 6, the pin 8a could be absent. However, the circumferential pretension ring 9 is maintained (not drawn).

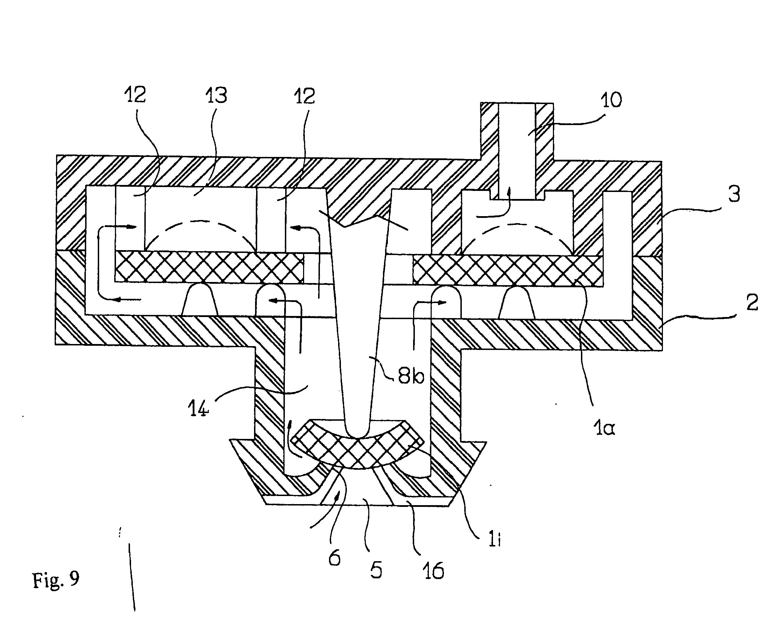

Drawings 9. 10 illustrate another variation of an ON-LINE emitter with two independent circular membranes 1i and 1a located at different levels as well. The membrane 1i operates as an inlet filter, whereas membrane 1a aims at maintaining the water discharge steady. Full correspondence with the cases of drawings I to 5 exists. In this case, the space 13 for the adjustment of the discharge extends along the circumference for achieving a smaller emitter height and the membrane 1a bears a hole for the pin 8b for the pretension to pass. In another variation, some support could pass through the hole for supporting the other membrane in general.

In this case the small channels 16 are arranged radially. The arrows show the direction of the water in the emitter. Drawing 14 illustrates a plan view of the main body 3. The adjustment chamber 13 may also bear a meander-like path.

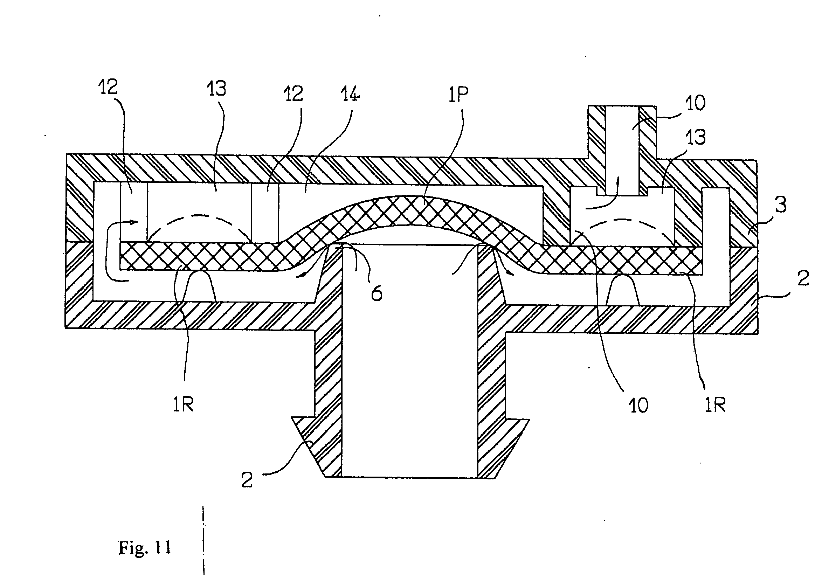

Drawing 11 illustrates another variation of an ON-LINE emitter with only one circular membrane 1. The part of the membrane 1P around its centre operates as a filter, whereas the part of its circumference 1R adjusts the discharge. The broken lines illustrate the position of the membrane during its operation. It is self evident that other parts of the same membrane 1P and 1R move independently of each other. It is evident that he invention is also applicable for cases where the discharge adjustment system is different than that described in this descriptions and drawings. Furthermore, all emitters described here can be also used by tubes formed by folding and raising the edges of a longitudinal plastic tape for forming a tube (TAPE)

In another variation the pin could have at the point of contact with the membrane the form of the curve of the bent membrane at the final phase of raising it by a distance of H1 (drawing 5).

## Claims

1. Self-compensating constant discharge emitter used for irrigation comprising a water inlet or filtering chamber consisting of an inlet ring (6) and a membrane (1) permanently pressed onto said ring (6) so that a light pretension develops which closes the space (14) located under the said membrane (1), a discharge adjustment chamber consisting of a water outlet hole or rim (10) and a membrane part (1 c) in front of the said hole or rim with which it co-operates modifying proportionately its distance (H2) from said water outlet hole (10) or rim depending on the pressure prevailing in the network, in order to maintain the discharge of the emitter constant, wherein water entering into the emitter from the water inlet or filtering chamber when the pressure in the network exceeds a predetermined value, which overcomes the pretension, lifts the membrane (1) over the ring (6) and forms a void space (H1) between the ring (6) and the membrane (1), the inlet or filtering chamber being spatially and functionally independent of any chamber for the partial or final discharge adjustment, and wherein the wide space (14) of the filtering chamber behind the corresponding part of the membrane (1e) is free of water passage means, like rims or holes or other paths for water pressure drop that could be blocked or covered by the membrane after its initial lift, causing an undesirable secondary additional moving and continuous displacing of said part (1e) of the membrane during the operation, said filtering chamber functioning as an ON-OFF valve with two totally discrete positions, a first position whereby, when water pressure is lower than the pretension of the membrane, the emitter is closed and the void space height is zero, and a second position whereby the emitter is in operation and the void space height (H1) is fixed, independent of the pressure of water in the network.

2. Emitter according to claim 1 where the water inlet chamber consists of the inlet rings (6c), (6a), the inlet hole (5) with the passage (19) on the main body (3), a part (1k) of the membrane (1) and the discharge adjustment chamber consists of the part (1I) of the membrane, the outlet hole or rim (10), the space (13) under the membrane part (1I) and the holes (20) on the cover part (2), water entering into the emitter from the inlet chamber suppresses the part (1 k) of the membrane with its convex part towards the rings (6c), (6a) and the inlet hole (5), forming a fixed void space for the water to pass, the part (1I) of the membrane altering proportionately its distance (H2) from the outlet hole (10) depending on the pressure prevailing in the network and effecting through the holes (20) of the cover part (2).

3. Emitter according to claims 1 with a water inlet chamber consisting of an inlet ring (6) on the cover part (2), a part of a membrane (1e), the wide space (14) located under the membrane (1e), the pin 8 of the main body (3) which exerts permanents pressure onto the above part of the membrane extending its convex part to the external surface of the cover part (2) and a discharge adjustment chamber consisting of the outlet hole or rim (10), and a membrane part (1c) in front of the above hole.

4. Emitter according to claims 2 and 3 where the membrane is permanently pressed by a circumferential ring (9) and the concave part of the membrane is located in the direction of water inlet.

5. Emitter according to claim 3 where the water inlet is affected through more than one ring or hole.

6. Emitter according to claims 1 where the membranes of the filtering and the adjustment chamber, are two separate parts.

7. Emitter according to claim 1 where a meander-like path interferes between the filtering and the adjustment chamber.

8. Emitter according to claim 3 where the membrane is permanently pressed by a pin (8) and the convex part of the membrane extends until the external surface of the cover of the emitter.

9. Emitter according to claim 3 where the convex part of the membrane extends further than the external surface of the emitter.

10. Emitter according to claim 3 where the pin (8) exerts an off-centre pressure to the membrane.

11. Emitter according to claim 3 where the pin (8) has the form of the curve of the bend membrane at the final stage of its rising.

12. Emitter according to claim 3 where the inlet ring has a non-circular shape.

13. Emitter according to claims 2 and 3, where the inlet ring bears small channels at parts of its circumference.

14. Emitter according to claim 4, where the membrane is also pressed by a pin (8a).

15. Emitter according to claims 2 and 3, where the cover of the emitter bears at the region of the inlet hole external channels (16) parallel to the direction of the flow of the water.

16. Emitter according to claim 3 where the water inlet is affected through part of the surface of the ring.

17. Emitter according to claim 2 where the water inlet is affected through the whole surface of the ring.

18. Emitter according to claims 2 and 3 where the membrane, apart from the pin, is pressed by a circumferential ring (9).

19. Emitter according to claims 1, 2 and 3, where its external shape is cylindrical

20. Emitter according to claims 1 , 2 and 3, suitable for ON-LINE installation

21. Emitter according to claim 19, with two independent membranes

## Patentansprüche

1. Selbstkompensierender Tropfer mit konstandem Wasserausfluss, bestimmt für Bewässerung, umfassend einen Wassereingangs- oder Filterraum, der aus einem Eingangsring (6) und einer Membran (1) besteht, die obengenannte Membran dauernd auf dem vorher erwähnten Eingangsring (6) gepresst, damit eine leichte Vorspannung herforgerufen wird die den Raum (14) der sich unter der Membran (1) befindet abschliesst, einen Ausflusskompensationsraum, umfassend eine Wasserausgangsöffnung oder Kranz (10) und ein Membranteil (1c) mit der er, durch die Variation seines Abstandes (H2) von der vorher erwähnten Wasserausgangsöffnung oder Kranz (10) proportional des Wasserdruckes der im Wassernetz herrscht, zusammenarbeitet, so dass der Wasserausfluss der Tropfer jeweils konstant bleibt, wobei das Wasser in den Tropfer durch den Wassereingang oder Filterraum, sobald der Wasserdruck der im Wassernetz herrscht einen vorgegebenen Wert erreicht hat der die Vorspannung übersteigt, eintritt, die Membran (1) über den Eingangsring (6) hochhebt und eine Spalte (H1) zwischen dem Eingangsring (6) und der Membran (1) formt, wobei der Wassereingang oder Filterraum funktions- und and raummässig von jedem Raum, der für partiale oder Endkompensation bestimmt ist, unabhänging ist, und wobei der breite Filterraum (14) hinten dem entsprechenden Membranteil (1e) frei von Wasserpassagen, wie Kränze, Öffnungen, oder andere Passagen bestimmt für Wasserdruckdrosselung, ist, die durch die Membran nach ihrer ersten Aufheben gedeckt oder blokiert werden könnten, welches Aufheben eine unerwünschte sekundäre Bewegung und fortlaufente Umstellung des Membranteiles (1e) während der Tropferfunktion hervorrufen wird, wobei der Filterraum als ein Auf und Zu Ventil mit zwei absolut diskrete Stellungen arbeitet, die erste Stellung, wenn der Wasserdruck niedriger als die Vorspannung der Membran ist, wo die Höhe der Spalte Null ist und die zweite Stellung, wenn der Tropfer in Funktion ist, wo die Höhe (H1) der Spalte, unabhängig von dem Wasserdruck der im Wassernetz herrscht, konstant bleibt.

2. Tropfer nach dem Anspruch 1, wobei der Wassereingangsraum, die Eingangsringe (6c), (6a), die Eingangsöffnung (5) mit der Passage (19) auf dem Hauptkörper (3), und ein Teil (1k) der Membran (1) umfasst, und der Ausflusskompensationsraum, ein Teil (1L) der Membran (1), die Ausgangsöffnung oder Kranz (10), den Raum (13) hinten den Membranteil (1L), und die Oeffnungen (20) auf dem Deckel (2) umfasst, wobei das Wasser in den Tropfer durch die Eingangsringe (6c), (6a), beim Drücken des Teiles (1k) der Membran (1) mit dem convexen Teil in Richtung der Eingangsringen (6c), (6a), eintritt, wobei die Eingangsöffnung (5) eine konstante Spalte für den Wassereintritt bildet,und wobei der Teil (1L) der Membran (1) sein Abstand (H2) proportional des Wasserdruckes der im Wassernetz herrscht der durch die Oeffnungen (20) auf dem Deckel (2) wirkt, variiert.

3. Tropfer nach dem Anspruch 1, wobei der Wassereingangsraum ein Eingangsring (6) auf dem Deckel (2) und ein Teil (1e) der Membran (1) umfasst, wobei der breite Filterraum (14) hinten der Membran (1e), eine Nadel (8) auf dem Hauptkörper (3), die einen dauernden Druck auf dem obengennanten Membranteil ausübt so dass seine konvexe Seite bis zu der äusseren Oberfläche des Deckels (2) ausdehnt, besitzt, und einen Ausflusskompensationsraum, eine Wasserausgangsöffnung oder Kranz (10) und ein Membranteil (1c) vor der obengennanten Öffnung, besitzt.

4. Tropfer nach dem Anspruch 2 und 3, wobei die Membran dauernd durch einen kreisförmigen Ring (9) gepresst wird, und die conkave Seite der Membran zur Wassereintrittsrichtung gewendet ist.

5. Tropfer nach dem Anspruch 3, wobei der Wassereintritt durch mehr als einen Ring stattfindet.

6. Tropfer nach dem Anspruch 1, wobei die Membranen des Filterraumes und des Ausflusskompensationsraumes, zwei getrennte Teilen sind.

7. Tropfer nach dem Anspruch 1, wobei zwischen Filter- und Kompensationsraum, eine meanderähnliche Passage existiert.

8. Tropfer nach dem Anspruch 3, wobei die Membran durch eine Nadel (8) dauernd gepresst wird, und die convexe Membranseite bis zu der äusseren Oberfläche des Deckels (2) sich ausdehnt.

9. Tropfer nach dem Anspruch 3, wobei die convexe Membranseite weit als die äussere Oberfläche des Deckels (2) sich ausdehnt.

10. Tropfer nach dem Anspruch 3, wobei die Nadel (8) einen exzentrischen Druck auf der Membran ausübt.

11. Tropfer nach dem Anspruch 3, wobei die Nadel (8) die Form der Kurve der Membran in ihrer Endzustand hat.

12. Tropfer nach dem Anspruch 3, wobei der Wassereingangsring keine Kreisförmige Form hat.

13. Tropfer nach dem Anspruch 3, wobei der Wassereingangsring kleine Kanäle auf Sectoren seines Umfangs besitzt.

14. Tropfer nach dem Anspruch 4, wobei die Membran zusätzlich durch eine Nadel (8a) gepresst wird.

15. Tropfer nach dem Anspruch 2 und 3, wobei der Deckel des Tropfers im Gebiet des Wassereingangs, ässerliche Rinnen (16) parallel zu der Wasserströmungsrichtung besitzt.

16. Tropfer nach dem Anspruch 3, wobei der Wassereintritt durch Sektoren des Umfangs des Ringes stattfindet.

17. Tropfer nach dem Anspruch 3, wobei der Wassereintritt durch den ganzen Umfang des Ringes stattfindet.

18. Tropfer nach dem Anspruch 2 und 3, wobei die Membran ausser der Nadel (8a), zusätzlich durch einen Kreisförmigen Ring gepresst wird.

19. Tropfer nach dem Anspruch 1, 2 und 3, wobei seine ässere Form zylindrisch ist.

20. Tropfer nach dem Anspruch 1, 2 und 3, wobei er für Auf und Zu Funktion geeignet ist.

21. Tropfer nach dem Anspruch 19, wobei er zwei unahängigen Membranen besitzt.

## Revendications

1. Goutteur auto compensé de décharge constante, utilisé pour l'irrigation, comprenant une entrée d'eau ou chambre de filtrage, constituée d'un anneau d'entrée (6) et d'une membrane (1) pressée en permanence sur le dit anneau (6) de sorte qu'une prétention légère se développe, qui ferme l'espace (14) situé sous la dite membrane (1), d'une chambre d'ajustement de décharge constituée d'un trou de sortie d'eau ou collerette (10) et d'une partie de membrane (1c) devant le dit trou ou collerette avec qui elle coopère en modifiant proportionnellement sa distance (H2) depuis le dit trou de sortie d'eau ou collerette (10) en fonction de la pression qui prévaut sur le réseau, afin de maintenir la décharge du goutteur constante, où l'eau entrant dans le goutteur depuis l'entrée d'eau ou chambre de filtrage quand la pression dans le réseau dépasse une valeur pre-determinée, qui dépasse la prétention, lève la membrane (1) au-dessus de l'anneau (6) et forme un espace vide (H1) entre l'anneau (6) et la membrane (1), la chambre d'entrée ou de filtrage en étant spatialement et fonctionnellement indépendante de toute chambre pour l'ajustement de charge partiale ou finale, et où le vaste espace (14) de la chambre de filtrage derrière la part correspondante de la membrane (1e) est libre de moyens de passage d'eau, comme collerettes ou trous ou autres voies pour la baisse de pression d'eau qui pourrait être bloquée ou couverte par la membrane après sa levée initiale, pouvant causer un mouvement additionnel secondaire indésirable et un déplacement continu de la dite pièce (1e) de la membrane au cours de l'opération, la dite chambre de filtrage fonctionnant comme une vanne ON-OFF avec deux positions totalement discrètes, une première position par laquelle, quand la pression d'eau est plus basse que la prétention de la membrane, le goutteur est fermé et la hauteur de l'espace vide est zéro, et d'une seconde position par laquelle le goutteur est en opération et la hauteur de l'espace vide (H1) est fixe, indépendante de la pression de l'eau sur le réseau.

2. Le goutteur, conformément à la revendication 1 où la chambre d'entrée d'eau consiste des anneaux d'entrée (6c), (6a), le trou d'entrée (5) avec le passage (19) sur le corps principal (3), d'une partie (1k) de la membrane (1) et de la chambre d'ajustement de décharge consistant de la partie (1I de la membrane, du trou ou de la collerette de sortie (10), de l'espace (13) sous la partie de membrane (1I) et des trous (20) sur la partie couvercle (2), l'eau entrant dans le goutteur depuis la chambre d'entrée presse la partie (1k) de la membrane avec sa part convexe en direction des anneaux (6c), (6a) et le trou d'entrée (5), formant un espace vide fixe pour le passage d'eau, la partie (1I) de la membrane modifiant proportionnellement sa distance (H2) depuis le trou de sortie (10) en fonction de la pression qui prévaut sur le réseau et effectuant à travers les trous (20) de la partie de couvert (2).

3. Le goutteur conformément à la revendication 1 avec une chambre d'entrée d'eau consistant d'un anneau d'entrée (6) sur la partie couvercle (2), une partie d'une membrane (1e), le vaste espace (14) situé sous la membrane (1e), la pointe 8 du corps principal (3) qui exerce une pression permanente sur la partie ci-dessus de la membrane étendant sa partie convexe sur la surface extérieure de la partie couvercle (2) et une chambre d'ajustement de décharge constituée du trou ou collerette de sortie (10), et d'une partie membrane (1a) devant le dit trou.

4. Goutteur conformément aux revendications 2 et 3 où la membrane est pressée en permanence par un anneau circonférentiel (9) et la partie concave de la membrane est située dans la direction de l'entrée d'eau.

5. Goutteur conformément à la revendication 3 à la prise d'eau est affectée à travers plus d'un anneau ou d'un trou.

6. Goutteur conformément à la revendication 1 où la membrane de filtrage et la chambre d'ajustement, sont deux parties différentes.

7. Goutteur conformément à la revendication 1 où une voie en forme de méandre intervient entre le filtrage et la chambre d'ajustement.

8. Goutteur conformément à la revendication 3 où une membrane est pressée en permanence par une pointe (8) et la partie convexe de la membrane s'étend jusqu'a la surface externe du couvercle du goutteur.

9. Goutteur conformément à la revendication 3 où la partie convexe de la membrane s'étend plus que la surface externe du goutteur.

10. Goutteur conformément à la revendication 3 où la pointe (8) exerce une pression excentrique sur la membrane.

11. Goutteur conformément à la revendication 3 où la pointe (8) a la forme de la courbe de la membrane courbée au stage final de sa montée.

12. Goutteur conformément à la revendication 3 où l'anneau 'entrée n'a pas de forme circulaire.

13. Goutteur conformément aux revendications 2 et 3, où l'anneau d'entrée porte de petits canaux sur parties de sa circonférence.

14. Goutteur conformément à la revendication 4, où la membrane est aussi pressée par une pointe (8a).

15. Goutteur conformément aux revendications 2 et 3, où le couvercle du goutteur porte sur la région du trou d'entrée des canaux externes (16) parallèles à la direction du flux de l'eau.

16. Goutteur conformément à la revendication 3 où l'entrée de l'eau est affectée à travers la surface entière de l'anneau.

17. Goutteur conformément à la revendication 2 où l'entrée de l'eau est affectée à travers la surface entière de l'anneau.

18. Goutteur conformément aux revendications 2 et 3 où la membrane, en plus de la pointe, est pressée par son anneau circonférentiel (9).

19. Goutteur conformément aux revendications 1, 2, et 3, où la forme extenseur est cylindrique.

20. Goutteur conformément à la revendication 1, 2, et 3, bon pour une installation ON-OFF.

21. Goutteur conformément à la revendication 19, avec deux membranes indépendantes.
